# EUROPEAN PATENT APPLICATION

(11) **EP 2 354 680 A1**
(43) Date of publication of application: **10.08.2011**
(21) Application number: 11152344.5
(22) Date of filing: 27.01.2011
(51) Int. Cl.: F24D 11/00, F28D 20/00, F28D 9/00

(54) **Stratifying accumulator device for water, particularly heating water**

(30) Priority: 04.02.2010 IT MI20100171
(71) Applicant: THERMOROSSI S.p.A., 36011 Arsiero (Vicenza) (IT)
(72) Inventor: Rossi, Fabio, 36015 Schio (VICENZA) (IT)
(74) Representative: Petruzziello, Aldo

(57) **Abstract**

There is described a water stratifying accumulator device (10), particularly heating hot water, comprising a water accumulator reservoir (12), a heat exchanger (14) placed outside said water accumulator reservoir (12) and in fluid communication therewith by means of an outlet duct (16, 16a, 16b, 16c) for heated water and an inlet duct (17) for water to be heated. The water accumulator reservoir (12) has a plurality of apertures (23), formed at different heights on its outer surface and designed to put the water accumulator reservoir (12) in fluid communication with at least one delivery pipe (M_{R}) and at least one backflow pipe (R_{R}) of the water to and from heating means (30, 40), The heat exchanger is a plate-type heat exchanger (14).

## Description

The present invention relates, in general, to a stratifying accumulator device. In particular, the invention relates to an accumulator device for stratifying primary hot water, i.e. heating hot water.

Stratifying accumulator devices are present on the market for a long time, Such known devices typically comprise a water accumulator reservoir and a heat exchanger placed outside the accumulator reservoir and in fluid communication therewith by means of a conveyor pipe which vertically extends, preferably for the whole height of the accumulator reservoir, and suitable for feeding hot water into the accumulator device in a stratified way.

The heat exchanger is of the tube bundle type, with tube made of iron, externally and internally smooth, or made of copper provided with external finning. It is preferably fed with a thermal carrier fluid, typically water added with glycol having antifreeze function, coming from one or more solar collectors. The feeding of the thermal carrier fluid to the heat exchanger takes place through forced-circulation by means of a conventional supply pump.

The accumulator reservoir has a plurality of sleeves, preferably arranged along the whole height thereof, from/to which the delivery and return pipes for the heating water start and arrive, respectively, to/from heating means, such as radiators and/or floor heating means.

The stratifying accumulator devices exploit the physical principle according to which the hot water, being lighter than the cold one, is prone to rise upward.

Particularly, the water becomes warm due to the thermal exchange with the thermal carrier fluid circulating within the heat exchanger, goes up along the conveyor pipe and is fed in the accumulator reservoir at a level as higher as higher is its temperature. Within the accumulator device the water will be, thus, stratified based on the temperature, with layers of hot water in the upper portion of the reservoir and layers of cold water in the lower portion thereof.

However, the above mentioned stratifying accumulator devices of the prior art have some drawbacks.

Firstly, the tube bundle heat exchanger arranged on the outside of the accumulator device has limited thermal exchange surfaces, and thus reduced water heating efficiency.

Moreover, as it is known, it is no possible to control the amount of heat produced by the sun, whereby in summer, as well as in winter during particularly sunny days, the heating of the thermal carrier fluid circulating within the solar collectors can be excessive. It follows an excessive thermal exchange between the thermal carrier fluid and the water within the heat exchanger, with a consequent thermal overload in the accumulator reservoir.

In the known stratifying accumulator devices, to overcome the above described drawback, the conveyor of the thermal carrier fluid from the solar collectors to the heat exchanger is interrupted, for example by stopping the supply pump. This implies a high risk the solar collectors to be damaged, as well as the thermal carrier fluid to be deteriorated.

EP 0 924 471 A2 discloses a heat accumulator comprising a container for holding a heat transfer medium in layers at different temperatures, a heat exchanger for heating the heat transfer medium and a rising pipeline connected to the container at different heights. The heat exchanger and the rising pipeline are outside the container, and the rising pipeline forms an automatically circulating loading circuit with the heat exchanger.

WO 2009/141379 A1 discloses a heat exchanger, particularly for motor vehicles, comprising an alternating stack of first plates and second plates respectively provided with first and second corrugations separated from one another by a first spacing and a second spacing, the second spacing being different from the first spacing, thereby defining, between the plates first circulation passages which alternate with second circulation passages.

FR 2 866 699 A1 and US 4 246 961 A disclose a plate-type heat exchanger.

The main object of the present invention is, thus, to provide a water stratifying accumulator device, particularly heating hot water, suitable for eliminating or at least reducing to a minimum the drawbacks above lamented with reference to the stratifying accumulator reservoir of the prior art, i.e. an accumulator device suitable for increasing the water heating and stratifying efficiency within the accumulator reservoir.

Another object of the present invention is to provide a stratifying accumulator device suitable for disposing of a possible thermal overload inside it, without damaging the solar collectors and the thermal carrier fluid circulating inside them,

Not last object of the invention is to provide a stratifying accumulator device which results easy to produce and has competitive manufacturing costs.

These objects, and other objects which will be clearer in the following, are obtained according to the invention having the features provided in the appended independent claim 1.

According to an aspect of the present invention, there is provided a water stratifying accumulator device, particularly heating hot water, comprising a water accumulator reservoir, a heat exchanger placed outside the water accumulator device and in fluid communication therewith by means of an outlet duct for heated water and an inlet duct for water to be heated. The accumulator reservoir has a plurality of apertures, formed at different heights on its outer surface and designed to put the water accumulator reservoir in fluid communication with at least one delivery pipe and at least one backflow pipe of the water to and from heating means. The stratifying accumulator device is characterized in that the heat exchanger is a plate-type heat exchanger and in that the movement of the water to be heated, coming from the water accumulator reservoir, among the plates of the plate-type heat exchanger and, after being heated, from the plate-type heat exchanger back to the accumulator reservoir is carried out through natural convection.

Advantageously, the stratifying accumulator device comprises a further heat exchanger horizontally provided within the accumulator reservoir at a highest level than the plate-type heat exchanger.

Further advantageous aspects of the invention are apparent from the dependent claims.

The features of the invention will be evident from the following detailed description, which refers to a purely exemplifying and therefore non-limiting embodiments thereof, illustrated in the appended figures, wherein:
Figure 1 is a cross-section view of a stratifying accumulator device according to the invention, taken along the longitudinal axis thereof;
Figure 2 is a circuit diagram, illustrating the operation of the stratifying accumulator device of Figure 1 in winter; and
Figure 3 is a circuit diagram, illustrating the operation of the stratifying accumulator device of Figure 1 in summer.

In the appended drawings equal or similar parts or components are designed with the same reference numbers,

With reference to the above listed Figures, it is now described a water stratifying accumulator device, particularly heating hot water, according to a preferred embodiment of the present invention.

The stratifying accumulator device, generally designed with the reference number 10, comprises an accumulator reservoir 12, designed to accumulate heating hot water, and a plate-type heat exchanger 14 placed outside the accumulator reservoir 12, preferably at the lower half thereof, and designed to heat the water accumulated therein. Preferably, the accumulator device 12 has a thermal insulating outer coating 13. Compared with a tube bundle type heat exchanger, conventionally used together with the known stratifying accumulator reservoirs, the plate-type heat exchanger 14 has wide thermal exchange surfaces and, particularly, a heat exchange between crossed counter-current flows.

Moreover, advantageously, the movement of the water to be heated coming from the accumulator reservoir 12 among the plates of the plate-type heat exchanger 14 and, after being heated, from the heat exchanger 14 back to the accumulator reservoir 12, takes place through natural convection, i.e, without using any supply pump.

Further, being the heat exchanger 14 placed outside the accumulator reservoir, a greater space will be, advantageously, available for the water (vertical) stratification process inside the accumulator device 12.

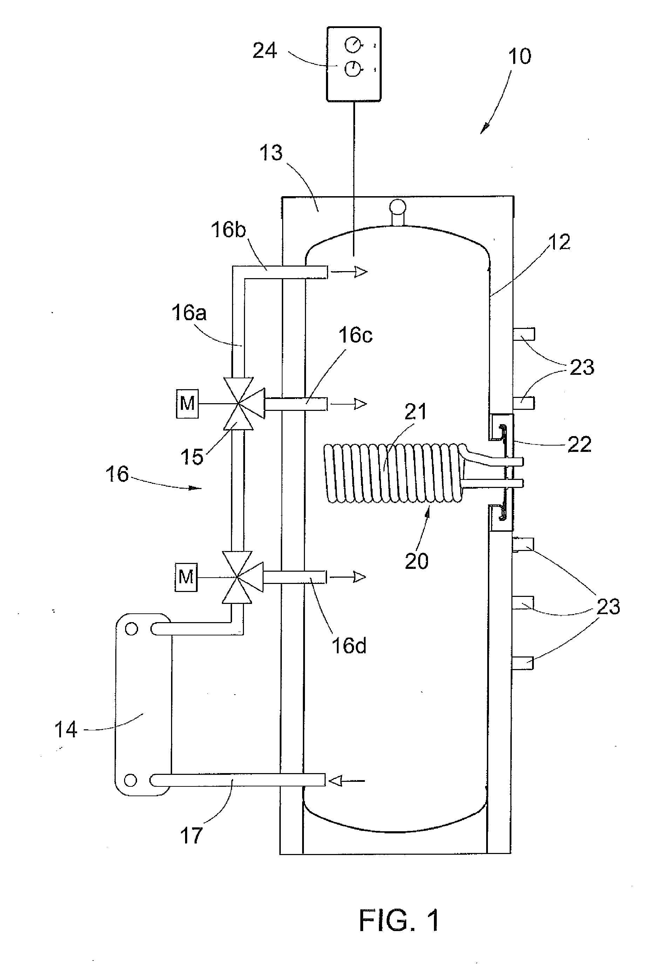

As shown in greater detail in Figure 1, the plate-type heat exchanger 14 is in fluid communication with the accumulator reservoir 12 by means of outlet duct 16 for feeding heated water into the accumulator reservoir 12 and an inlet duct 17 for cold water to be heated, coming from the accumulator reservoir 12.

In particular, the outlet duct 16 consists of a conveyor pipe 16a, which vertically extends, preferably for the whole height of the accumulator reservoir 12, and is provided with a plurality of branches 16b, 16c, 16d, preferably equally spaced, suitable for allowing hot water to enter the accumulator device 12 at different heights.

In the illustrated embodiment, three inlet branches 16b, 16c, 16d are shown, but it is possible to provide any number of inlet branches as a function of the water stratification level one desires to obtain within the accumulator reservoir 12, as well as of the size of the accumulator device itself.

On the intermediate inlet branch 16c, or on other possible inlet branches, a thermostatic valve 15 is provided, which is suitable for discriminate the inlet level of the hot water flow within the accumulator reservoir 12 as a function of its temperature and of the temperature of the water within the accumulator reservoir 12. This allows, advantageously, a undesired mixing between the water flow entering the accumulator reservoir and the water present therein, which would alter the stratifying efficiency of the accumulator device, to be avoided,

As an example, it is assumed that the water within the accumulator device is cold and that the water flow coming from the heat exchanger through the intermediate branch 16c is tepid. In this case, the thermostatic valve 15 will act to direct the inlet water flow to the lower portion of the reservoir 12, e.g. through the inlet branch 16d.

Preferably, the stratifying accumulator device 10 of the invention comprises a further heat exchanger 20, preferably of the type provided with a coil 21.

The further heat exchanger 20 is horizontally placed within the accumulator reservoir 12, at an upper level with respect to the plate-type heat exchanger 14, preferably at the upper half of the accumulator reservoir 12.

At the inner heat exchanger 20, the accumulator reservoir 12 has a flange 22, suitable for facilitating the operations of inspection and possible replacement of the inner heat exchanger 20.

To not alter the thermal stratification within the accumulator reservoir 12, a thermal carrier fluid having a temperature greater than that of the thermal carrier fluid circulating in the plate-type heat exchanger 14 has to circulate in the coil 21. To this end, the thermal carrier fluid entering the inner heat exchanger 20 is, preferably, fed by high temperature thermal sources, such as a solid fuel generator.

The presence of the further heat exchanger 20 advantageously allows to carry out a higher temperature thermal exchange at the upper portion of the accumulator reservoir 12, thus increasing the heating efficiency of the stratifying accumulator device 10.

The stratifying accumulator device 10 further comprises temperature detector means 24 of the known type, suitable for measuring the temperature of the water at the upper layers of the accumulator device 12, and which will be described in greater detail in the following of the present specification.

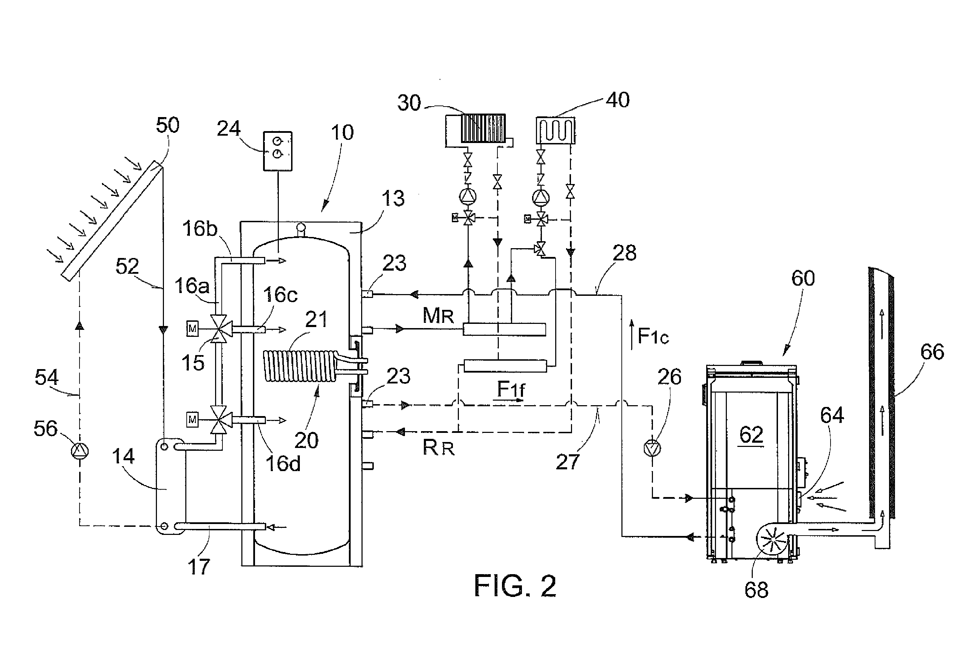

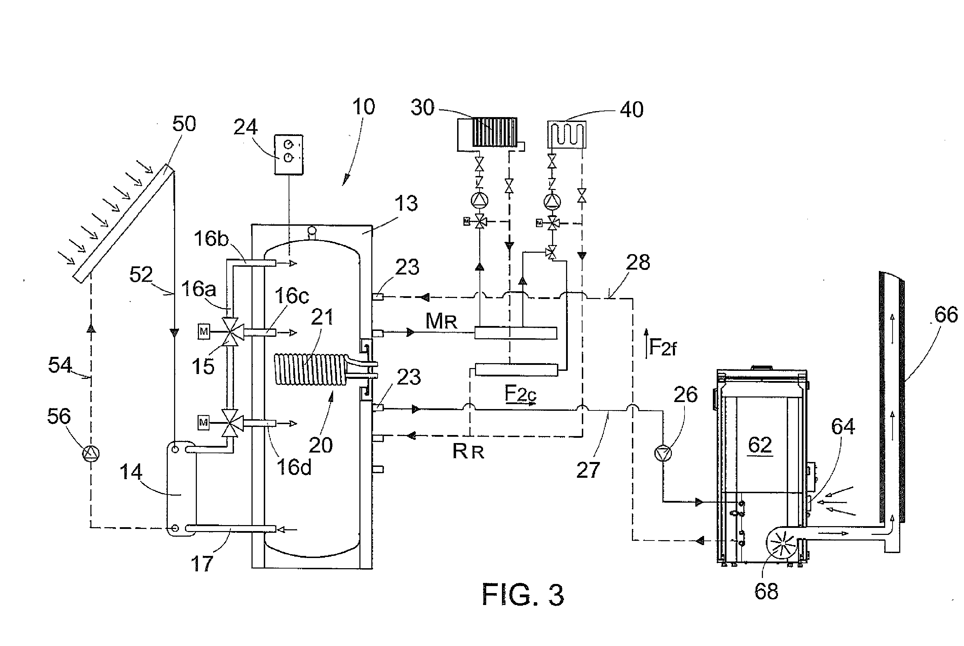

As shown in Figures 2 and 3, preferably, the heat exchanger 14 is in fluid communication with one or more solar collectors 50 through ad inlet duct 52 and an outlet duct 54, from which it receives the thermal carrier fluid, typically water added with glycol. On the outlet duct is provided a supply pump 56.

Moreover, on the outer surface of the accumulator reservoir 12 are present apertures, preferably a series of sleeves 23, for connecting water delivery pipes M_{R} and water backflow pipes R_{R}, suitable for put the accumulator reservoir 12 in fluid communication, respectively, with heating means, such as a radiator 30 and/or floor heating means 40.

For simplicity of illustration, Figures show one delivery pipe M_{R} and one backflow pipe R_{R}.

In particular, within the delivery pipes M_{R}, which start from the upper portion of the accumulator reservoir 12, water flows, which is more or less hot as a function of the delivery height, directed to the heating means 30, 40, whereas within the backflow pipes R_{R}, which mouth in the lower portion of the accumulator device 12, cold water flows backflowing from the heating means 30, 40.

Moreover, the stratifying accumulator device is in fluid communication with a heat generator 60, e.g. a pellet generator, through an outlet pipe 27 and an inlet pipe 28.

The outlet pipe 27 starts from the intermediate and/or lower portion of the accumulator reservoir 12, whereas the inlet pipe 28 mouths in the upper portion of the accumulator reservoir 12. On the outlet pipe 27 is present a pump 26, which function will be apparent in the following of the present specification.

The heat generator 60 is of known type and comprises, inter alia, a combustion chamber 62, a fan 64 for feeding external cold air into the combustion chamber 62 suitable for promoting the combustion, a chimney 66 and a smoke aspirator 68 suitable for sucking the flue gas generated within the combustion chamber 62 and for blowing off it outside through the chimney 66.

In particular, and how it will be better understood in the following of the present specification, the heat generator 60 operates according to two ways: an active way and a passive way. In the active way, the heat generator 60 is on and heats the water present within the accumulator reservoir; in the passive way, the heat generator 60 is off and dissipates the extra heat in the event it is present within he accumulator reservoir 12.

With specific reference to Figures 2 and 3, it is now described in detail the operation of the stratifying accumulator device 10 of the invention.

In particular, the thermal carrier fluid warms within the solar collectors 50 and is delivered, by forced convection, to the heat exchanger 14, through the inlet duct 52, Within the heat exchanger 14 the heat exchange, in countercurrent, between the hot thermal carrier fluid and the cold water entering the heat exchanger 14 through the inlet duct 17 is carried out, this latter being drawn back, through natural convection, by the warm thermal carrier fluid circulating within the heat exchanger 14. Following this thermal exchange, the thermal carrier fluid becomes cold and backflows to the solar collectors 50 by the operation of the pump 56, whereas the water warms and is fed, always by natural convection, into the accumulator reservoir through the conveyor pipe 16a.

The feeding of the thermal carrier fluid to the heat exchanger 14 though natural convection, i.e. without the presence of a pump, advantageously provides a saving of energy, as well as a greater water stratification efficiency within the accumulator reservoir 12.

Moreover, a suitable dimensioning of the plate-type heat exchanger 14, for example high and narrow, together with a right dimensioning of the conveyor pipe 16a, allows to obtain a minimal thermal gradient, typically of the order of 1-2 °C, between the thermal carrier fluid entering the heat exchanger 14 through the inlet duct 52 and the heated water outputted from the heat exchanger 14 through the conveyor pipe 16a.

In particular, the heated water within the heat exchanger 14 rises along the conveyor pipe 16a to a height depending on the temperature obtained following the thermal exchange with the thermal carrier fluid within the heat exchanger 14 and it enters the accumulator reservoir 12 through the respective inlet branch 16b, 16c, 16d, as shown by the arrows.

For example, if the thermal exchange has been such to allow the water to reach high temperatures, typically of the order of 70°C, the water rises along the whole conveyor pipe 16a to enter the accumulator reservoir 12 through the higher outlet branch 16b, In the upper portion of the accumulator reservoir 12 is, thus, available hot water at high temperature to be fed, for example, to the radiators 30 and/or the floor heating means 40.

On the contrary, if the thermal exchange has been limited, the water partially rises along the conveyor pipe 16a to enter the accumulator reservoir 12, for example through the intermediate inlet branch 16c. In the intermediate portion of the accumulator reservoir 12 is thus available water at a lower temperature to be delivered, for example, to a plant at lower temperature (not shown).

This advantageously results in the absence of a mixing of water flows having different temperatures and in the consequent water stratification as a function of the temperature, with warmer water layers at the upper portion of the reservoir and less warm water layers at the lower portion thereof.

As it is known, in winter, the efficiency of the solar collectors 50 is significantly reduced. In order to guarantee a suitable water stratification in the accumulator reservoir 12, a heat generator 60 in its active operation way above defined is used.

This situation is shown in detail in Figure 2, which shows the operation of the stratifying accumulator device 10 in winter.

In particular, a water flow F_{1f} coming from the lower layers, thus less warm, is fed, by actuating the pump 26, to the heat generator 60 through the outlet duct 27. Within the heat generator 60 the thermal exchange between the water flow F_{1f} and flue gas produced within the combustion chamber 62 is carried out. Following this thermal exchange, the water flow F_{1f} warms and back enters at a higher temperature, flow F_{1c} the upper portion of the accumulator reservoir 12, through the inlet duct 28.

On the contrary, in summer, the efficiency of the solar collectors 50 is maximum, whereby, as described above, a thermal overload would occur within the accumulator reservoir. To dispose of this extra heat, the heat generator 60 is used in the above defined passive way.

This condition is shown in detail in Figure 3, which illustrates the operation of the stratifying accumulator device 10 in summer.

In particular, the temperature sensor means 24 detect the temperature value of the water within the accumulator reservoir 12 and, if this value is greater than a predetermined safety threshold value, typically varying between about 70°C and about 85°C, the pump 26 is activated, thereby triggering a transfer of a flow F_{2c} of hot water from the accumulator reservoir 12 to the heat generator 60, through the outlet pipe 27.

As the heat generator 60 operates in the passive way, i.e. it is off, a heat exchange between the how water flow F_{2c} coming from the accumulator reservoir 12 and the generator walls occurs therein. Following such a heat exchange, the water flow become cold and back enters, at a lower temperature, flow F_{2f}, the upper portion of the accumulator reservoir 12, through the inlet pipe 28. The walls warms, then acting as heat dissipation means.

In order to increase the heat disposal efficiency, the fun 64 and/or the smoke aspirator 68 of the heat generator 60 are, advantageously operated. In the first case, the room air entering the heat generator 60 by means of the fun 64 acts as a thermal exchange fluid, rather than as comburent. In the second case, the room air which is become hot following the thermal exchange with the hot air, rather than the flue gas, is expelled through the chimney 66.

Without departing from the scope of the invention determined by the claims, a person skilled in the art can make to the embodiment of the invention previously described all those changes and improvements suggested by normal experience and/or by the natural evolution of the art.

## Claims

1. A water stratifying accumulator device (10), particularly heating hot water, comprising a water accumulator reservoir (12), a heat exchanger (14) placed outside said water accumulator reservoir (12) and in fluid communication therewith by means of an outlet duct (16, 16a, 16b, 16c) for heated water and an inlet duct (17) for water to be heated, said water accumulator reservoir (12) having a plurality of apertures (23), formed at different heights on its outer surface and designed to put the water accumulator reservoir (12) in fluid communication with at least one delivery pipe (M_{R}) and at least one backflow pipe (R_{R}) of the water to and from heating means (30, 40),
**characterized in that** said heat exchanger is a plate-type heat exchanger (14) and **in that** the movement of the water to be heated, coming from the water accumulator reservoir (12), among the plates of the plate-type heat exchanger (14) and, after being heated, from the plate-type heat exchanger (14) back to the accumulator reservoir (12) is carried out through natural convection.

2. A device (10) according to claim 1, **characterized in that** said outlet duct (16, 15a, 16b, 16c) for heated water comprises a conveyor pipe (16a) vertically extending and provided with a plurality of branches (16b, 16c, 16d) for entering heated water into the water accumulator reservoir (12).

3. A device (10) according to claim 2, **characterized in that** a thermostatic valve (15) is provided on at least one of said inlet branches (16b, 16c, 16d).

4. A device (10) according to any one of the preceding claims, **characterized in that** said plate-type heat exchanger (14) is in fluid communication with at least one solar collector (50), through an inlet duct (52) and an outlet duct (54).

5. A device (10) according to any one of the preceding claims, **characterized in that** it comprises a further heat exchanger (20) horizontally placed within said water accumulator reservoir (12) at an upper level with respect to said plate-type heat exchanger (14).

6. A device (10) according to any one of the preceding claims, **characterized in that** said water accumulator device (12) is in fluid communication with a heat generator (60) through an outlet pipe (27) and an inlet pipe (28).

7. A device (10) according to claim 6, **characterized in that** said outlet pipe (27) starts from the intermediate or lower portion of the water accumulator reservoir (12), whereas said inlet pipe (28) leads to the upper portion of the water accumulator reservoir (12).

8. A device (10) according to claim 6 or 7, **characterized in that** said heat generator (60) operates according to two ways: an active way, wherein it is on and acts as a heating means of the water within the water accumulator reservoir (12), and a passive way, wherein it is off and acts as a dissipator of the excess of heat possibly present within the water accumulator reservoir (12).

9. A device (10) according to any one of the preceding claims 6 to 8, **characterized in that** said heat generator (60) comprises a combustion chamber (62), a fan (64) for entering external atmosphere air, and a exhaust chimney (66, 68).

10. A device (10) according to claim 9, **characterized in that**, when said heat generator (60) is in the active way, it receives a water flow (F_{1f}) coming from the water accumulator reservoir (12) through said outlet pipe (27), said water flow (F_{1f}) being heated by means of thermal exchange with combustion gas produced within said combustion chamber (62) and back entering, at an increased temperature (F_{1c}), the upper portion of said water accumulator reservoir (12), through said inlet pipe (28),

11. A device (10) according to any one of the claims 6 to 8, **characterized in that** it further comprises temperature detector means (24) designed to detect the water temperature at the upper layers within said water accumulator reservoir (12) and to activate the transfer of a water flow (F_{2c}) from said water accumulator reservoir (12) to said heat generator (60), which operates in the passive way, through said outlet pipe (27), in the event said temperature overcomes a prefixed safety threshold value.

12. A device (10) according to claim 11, **characterized in that**, within said heat generator (60), said water flow (F_{2c}) coming from said water accumulator reservoir (12) through said outlet pipe (27) becomes cool following to thermal exchange with the walls of the heat generator (60) and back enters, at a lower temperature (F_{2f}), the upper portion of the water accumulator reservoir (12), through said inlet pipe (28).
